# EUROPEAN PATENT SPECIFICATION

(11) **EP 0 575 316 B1**
(45) Date of publication and mention of the grant of the patent: **26.02.1997**
(21) Application number: 91906833.8
(22) Date of filing: 12.03.1991
(51) Int. Cl.: G06F 17/20, G09G 1/00

(54) **DISPLAY SYSTEM AND METHOD FOR CONTEXT-BASED SCROLLING**
ANZEIGESYSTEM UND -VERFAHREN ZUR KONTEXT-BASIERTEN VERSCHIEBUNG
SYSTEME D'AFFICHAGE ET PROCEDE DE DEFILEMENT DEPENDANT DU CONTEXTE

(43) Date of publication of application: 29.12.1993
(73) Proprietor: WANG LABORATORIES, INC., Billerica, MA 01821 (US)
(72) Inventor: KNOWLTON, Kenneth, C., Merrimack, NH 03045 (US)
(74) Representative: Behrens, Dieter, Dr.-Ing.
(86) International application number: US9101652
(87) International publication number: WO9216898

(56) References cited:
- GB-A- 2 137 788
- GB-A- 2 156 118
- US-A- 4 428 065
- US-A- 4 451 900
- US-A- 4 823 303

## Description

A portion of the disclosure of this patent document contains material which is subject to copyright protection. The copyright owner has no objection to facsimile reproduction by anyone of the patent document or the patent disclosure, as it appears in the Patent and Trademark Office patent file or records, but otherwise reserves all copyright rights whatsoever.

### FIELD OF THE INVENTION

The present invention relates to computer-based systems and methods for displaying, navigating through, and editing documents.

### BACKGROUND

It is common for computer-based systems to provide for viewing of a document that is larger than can legibly be displayed to the user at one time. In most cases, the document is conceived as a linear, or two-dimensional, arrangement of text or other data, a portion of the document is displayed, and commands are made available to the user to move the display forward and backward through the document. For example, the system may be provided with a screen forward key and a screen backward key, thereby permitting the user to move forward to the next or previous displayable portion of the document. Commands may also be provided to move by other size units of the document, such as by line of text or by document page (which may differ in size from the amount that can be displayed at one time).

Since the user only sees a portion of the document the user may have no way of determining what portion of the overall document is being viewed, without starting at one end of the document and stepping through the document a screen at a time. The user lacks a context for the portion being displayed. Moreover, the user has no convenient way of going directly to a part of the document that might be recognizable by its coarse visible features and by its position in the overall document.

To address the problem of lack of context, some systems provide a numeric indication of where in the overall document the portion that is currently being displayed (or, more precisely, the current cursor location) is located, e.g., page number, line number, percentage of the total document length.

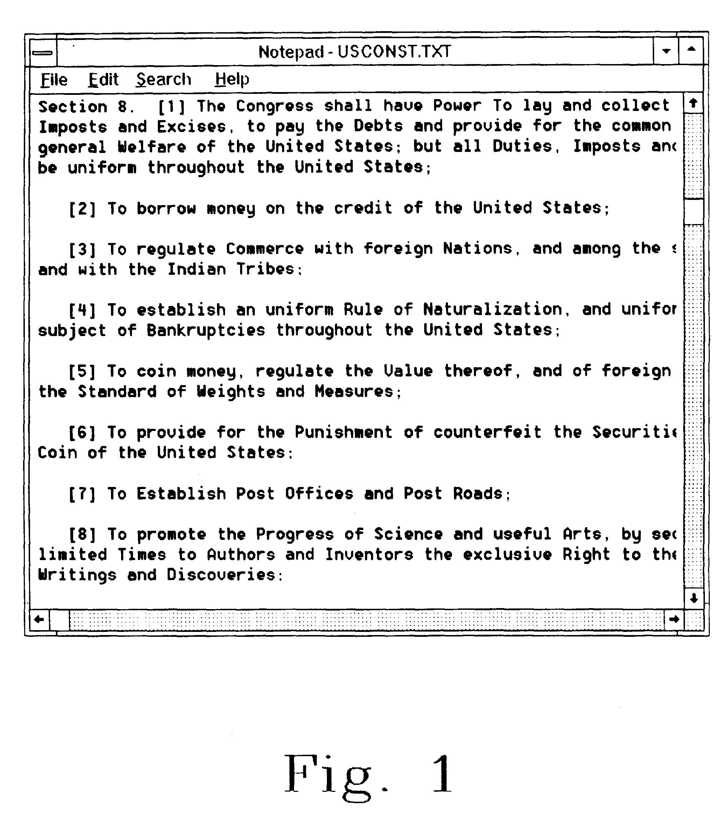

Since approximately the middle of the 1970s (e.g., work done at Xerox Corporation's Palo Alto Research Center), it has become increasingly common for user interfaces to provide for navigation through a document by means of a scroll bar. A scroll bar includes a marker that provides an analog visual indication of the location of the currently displayed portion. For example, Microsoft Corporation has produced various versions of a product known as Windows, which uses scroll bars. A user positions a mouse pointer at various locations on a scroll bar and clocks or drags to move through the document. Fig. 1 shows the display of a portion of a document and shows both horizontal and vertical scroll bars for use in navigating through a document, as provided in the Windows "notepad" application.

The vertical scroll bar includes several elements: at the top of the bar is an up arrow; at the bottom of the bar is a down arrow; in the region between the arrows is positioned a movable block. The relative position of the block indicates the approximate relative location within the document of the portion that is displayed. In the notepad application, the scroll bar operates as follows: clicking on the up arrow moves the document down one line (i.e., as if the window into the document is moving up); clicking on the down arrow moves the document up one line; clicking in the region above the movable block moves the document down one screen; clicking in the region below the movable block moves the document up one screen; dragging the movable block causes the display to scroll to the position within the document indicated by the relative position of the movable block within the scroll bar.

Scroll bars provide an indication of the position within the document of the currently displayed portion of the document. However, it does not provides any information context for the currently displayed portion, nor does it provide a way for a user to discern visible features of the document which may be useful for identifying a desired location in the document. Systems have been developed for displaying a portion of the current document surrounding the currently displayed portion. For example, U.S. Patent 4,428,065, issued Jan. 24, 1984 to Duvall et al.; U.S. Patent 4,451,900, issued May 29, 1984 to Mayer et al.; U.K. Patent publication 2 137 788A, published Oct. 10, 1984; U.K. Patent publication 2 156 118A, published Oct. 2, 1985; and U.S. Patent 4,823,303, issued Apr. 18. 1989 to Terasawa, all illustrate in which the display screen is divided into at least two parts. In one part, a window provides a legible display of a portion of the document for viewing, editing, etc. In a second part, the page of the document in which the portion of the document being legibly displayed resides is displayed, in visually compressed form, independently of the window providing the legible display. In addition, an indication is provided on the visually compressed portion of which part of the page is being currently displayed in the legible display. Such systems provide more context information than do scroll bars.

U.S. Patent No. 4,428,065 teaches a display screen and a means for displaying two separate and independent displays wherein one display is a representation of a portion of a document in compressed form and the other display is a legible representation of a portion of the portion of the document shown in compressed form but wherein the relationship between the separate and independent legible and compressed displays is not even indicated by any form of direct representation or visual marking in the compressed display.

U.S. Patent No. 4,451,900 shows a display screen and a means for displaying two separate and independent displays wherein one display is a representation of a portion of a document in compressed form and the other display is a legible representation of a portion of the portion of the document shown in compressed form and wherein the relationship between the separate and independent legible and compressed displays is indicated by a visual marking in the compressed display that indicates the portion of the document represented in the legible display.

U.K. Patent No. 2,137,788 is very similar and shows a system having a display screen and a means for displaying a few lines of a document in legible form and for superimposing on the legible display a separate, independent display showing an overall view of a portion of the document in compressed form and wherein the relationship between the separate and independent legible and compressed displays is indicated by a visual marking in the compressed display that indicates the portion of the document represented in the legible display.

### SUMMARY OF THE INVENTION

The system and the method of the invention are defined in claims 1 and 13, respectively. The fundamental idea of the invention is to display a document on a display screen wherein a first portion of the document is displayed in as visually compressed form and a second portion of the document is displayed in legible form. In the visually compressed portion of the document the displayed form of the document is compressed so that the characters of the document are not legible but the general form and shape of the document, such as paragraphing, headings and so forth, is discernible, thereby allowing the display of a significantly greater portion of the document on a display screen. The displayed form of the document is not compressed in the legible portion of the documents, so that the characters, that is, the text of the document, is readable in the legible portion of the document. The visually compressed and legible portions of the document together comprise a single, unitary image, or display, with the legible portion being located and displayed within the visually compressed portion at the location within the visually compressed portion that contains the text that is displayed in the legible portion of the document. The location of the legible portion of the document within the visually compressed portion of the document thereby indicates directly the context of the legible portion of the document within the visually compressed portion of the document.

A system according to the present invention displays the context of a much larger portion of a document than can be legibly presented in the available display area. This is accomplished by presenting the document in a visually compressed form, which is compressed to such a degree that the characters of the text are not legible, but larger shapes remain visible - i.e., overall shapes in the document, such as headings, blank lines, paragraphs, and indentations. Windows of legible text are movable through the visually compressed portion, as if magnifiers were moved across a distant or miniature document.

According to a preferred embodiment of the invention, legible tags are displayed at appropriate locations in the document in the visually compressed area, as well as in the legible portion. For example, when the tags show the result of a search for all occurrences of a character string, the tags allow a user to refer quickly to all of the occurrences of the riling (such as to see where a subroutine is defined and all the places where it is called).

In a further preferred embodiment of the invention, highlighting such as by color is used to identify significant portions of the document in both the legible windows and in the visually compressed portions.

Preferably, at least a portion of the visually compressed text is compressed in only the vertical dimension. In this case, the visually compressed portion is of the same width as the legible portion, permitting a smooth visual transition from one to the other.

The present inventive display arrangement is suitable for navigation through more than just "documents" in a narrow sense. It is also suitable for moving through large bodies of other displayable material, such as data retrieval results.

Although useful as a stand-alone browser, this display arrangement is suitable for incorporation into a variety of computer-based applications requiring display and possibly modification of more data than can fit in the area available for display.

### BRIEF DESCRIPTION OF THE DRAWING

The invention is pointed out with particularity in the appended claims. The above and other advantages of the invention may be better understood by referring to the following detailed description in conjunction with the drawing, in which:

Fig. 1 shows prior art screen display that includes scroll bars.

Fig. 2 is a block diagram illustrating physical aspects of an illustrative system implementing the present invention.

Fig. 3 is a block diagram illustrating logical aspects of an illustrative system implementing the present invention.

Fig. 4 shows a presentation on a display screen according to the present invention, with a single window of legible text.

Fig. 5 shows a display similar to Fig. 4, but with two windows and with tags indicating the results of a search.

Fig. 6 shows a portion of the display of Fig. 5 on an expanded scale, such that individual pixels are visible.

Fig. 7 shows a display where embedded tags have been made visible.

Fig. 8 shows a portion of the display of Fig. 7 on an expanded scale.

Figs. 9, 10, 11, and 12 each show the same portion of the display as shown in Fig. 8 with the window of enlarged text moved down one line in each successive figure.

Fig. 13 is an overall flowchart of a program used in implementing the present invention.

Figs. 14 and 15 are flowcharts detailing portions of the flowchart of Fig. 13; Fig. 14 details keystroke processing, and Fig. 15 details stylus processing and window movement.

Fig. 16 illustrates schematically a screen display according to an embodiment of the invention particularly suited to longer documents.

### DETAILED DESCRIPTION OF AN ILLUSTRATIVE EMBODIMENT

An illustrative embodiment of the present invention (referred to below as "the scroll system") is implemented with a computer system and a computer program (referred to below as SCROLL).

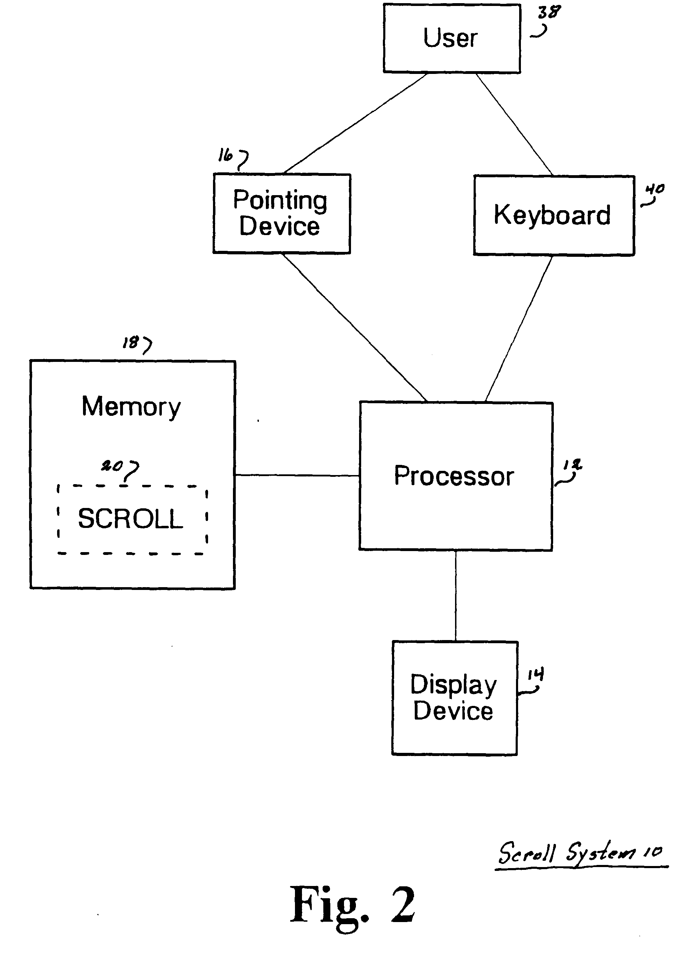

Fig. 2 is a block diagram illustrating a physical arrangement of the scroil system 10. The computer system in this illustrative embodiment includes a processor 12 such as the 80386 (Intel Corporation) running the MSDOS operating system (Microsoft Corporation), a high resolution display 14 having a display area of 1024 by 1024 binary pixels, and a digitizing tablet 16 and associated stylus. The computer system includes memory 18 (both mass storage and main memory) in which SCROLL 20 (as well as other programs and data) is stored. The invention could readily be implemented using other computer systems: other processors, other operating systems, other displays (e.g., VGA), and other pointing devices 16 (e.g., mouse) could be used. Given the graphical nature of the displays produced by the invention, one skilled in the art will appreciate the implications of processor and display controller performance on the utility of the invention. For example, a system with less speed at performing the graphical operations required will appear to a user to be less responsive to the user's actions. Also, considering the manner in which the display is utilized, one skilled in the art will appreciate the implications of displays of various sizes, bit-plan depths, and resolutions.

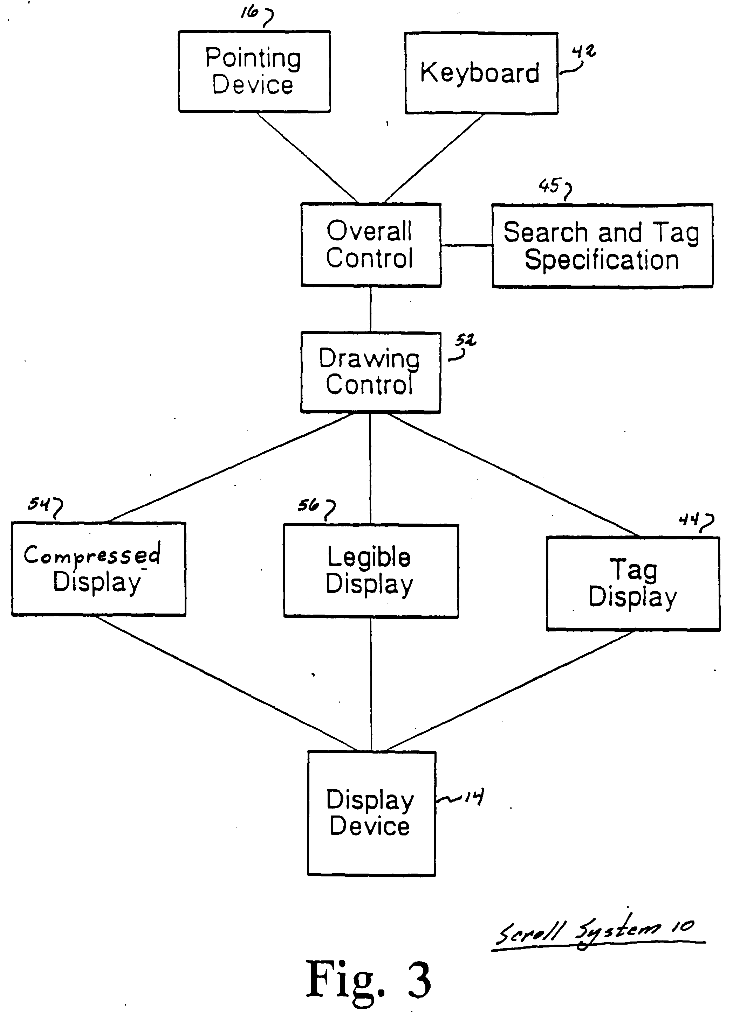

Fig. 3 is a block diagram illustrating a logical arrangement of the scroll system. The components of this diagram are described in greater detail following a discussion of operational aspects of the system.

### 1 Operation

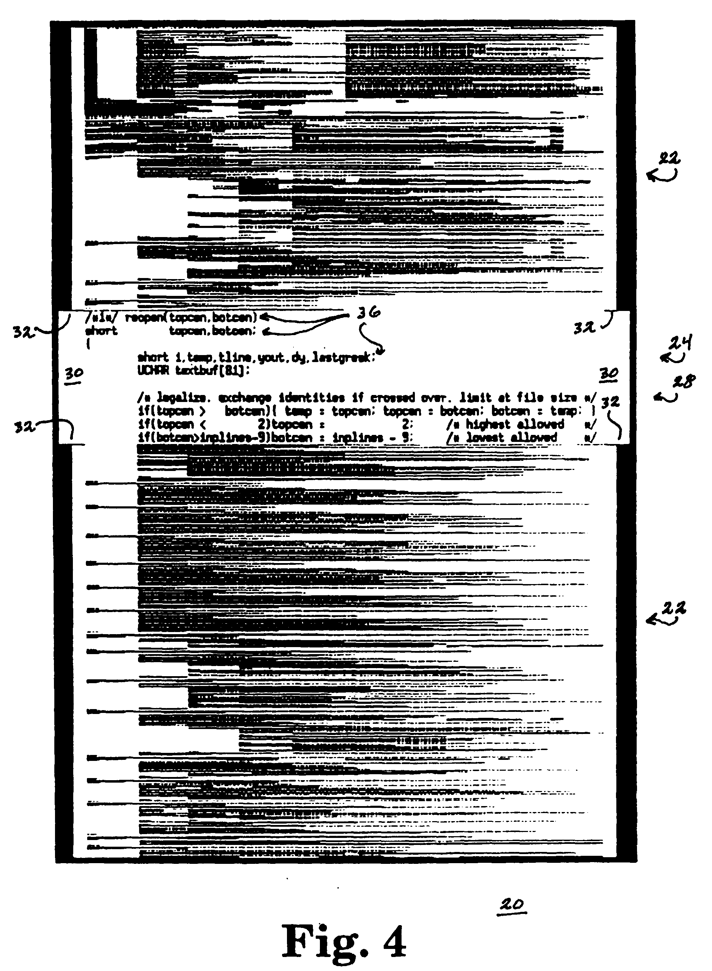

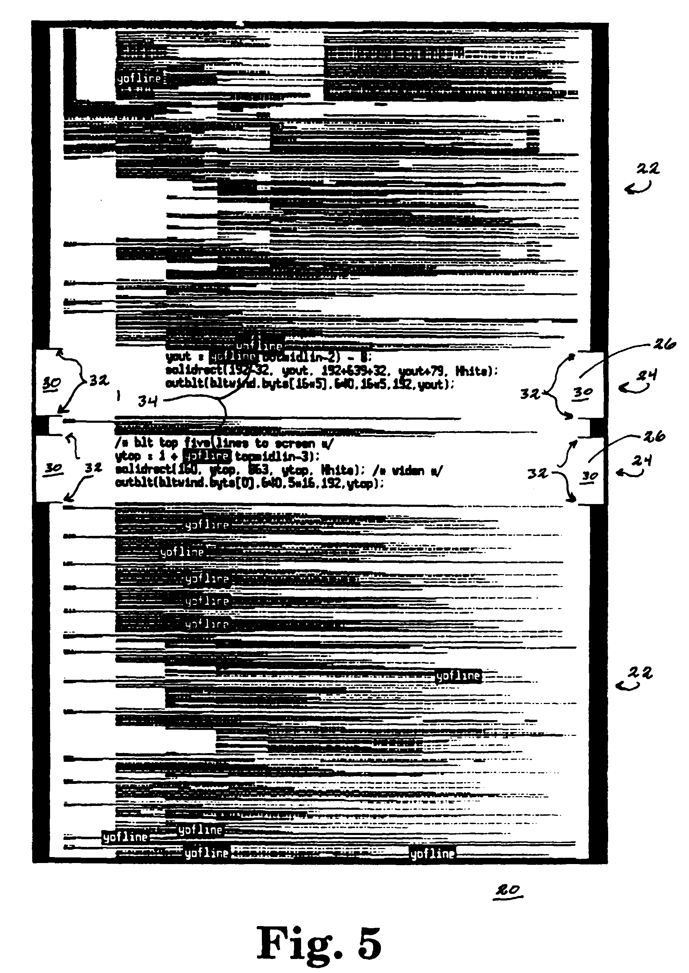

The scroll system presents to a user of the system a visually compressed display of a document. Fig. 4 is a picture of a display screen 20 with a document displayed mostly in visually compressed form 22, with a window 24 of legible text. The display presented by the scroll system is somewhat like a vertically compressed display of a document over which are placed two bars 26 that magnify vertically (as shown in Fig. 5), creating two windows 24 of legible text. The user is able to discern gross shapes in the compressed text, and can read that the text in each of the two magnified areas. Controls provided by the system permit the user to move the "magnifiers", and thereby select the portions of the document to he readable. When the two windows are moved adjacent to each other, they become latched (as shown in Fig. 4) and can be moved as a single large window 28.

The visually compressed text is bordered (left and right) by wite margins 30. So that a user can clearly see the location and extent of the windows, the windows are visually indicated in two ways: these windows extend horizontally beyond the margins of the visually compressed portion and there are short lines 32 (through the margin of the visually compressed portion) on each side at the top and bottom of each window.

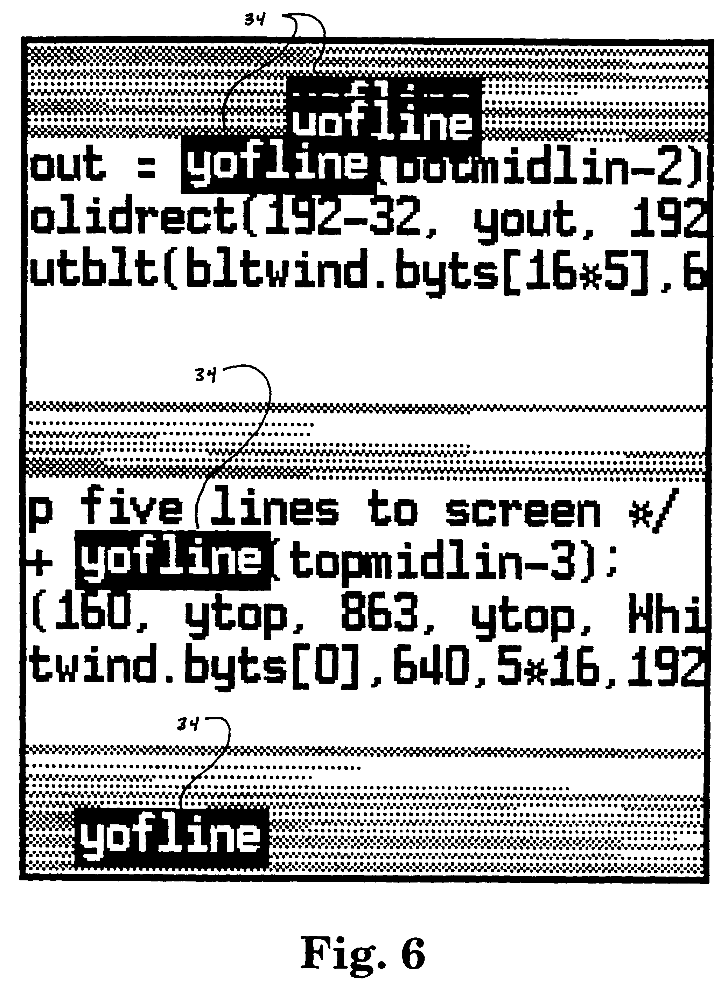

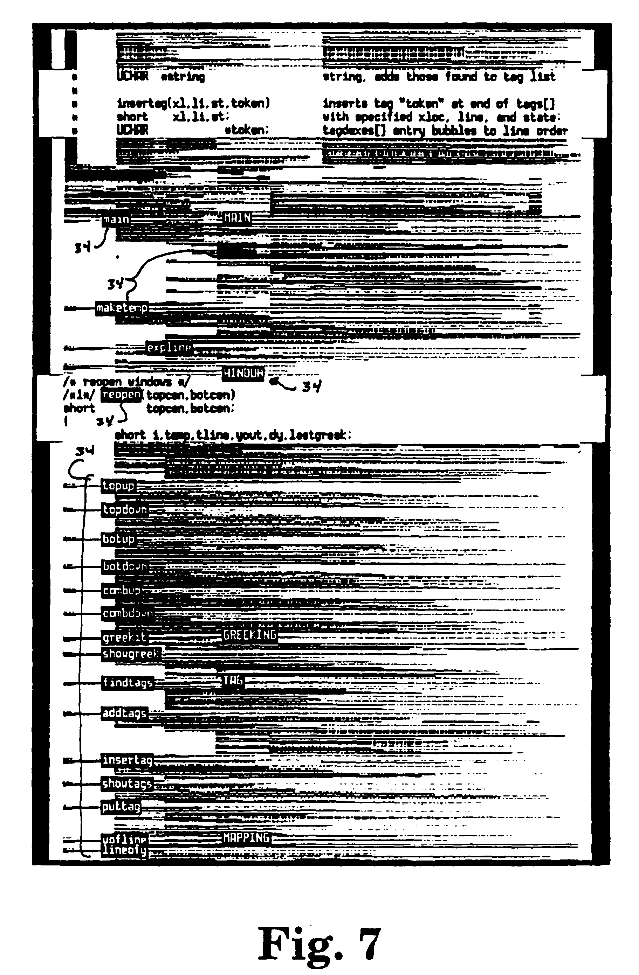

A user can control the visibility of tags, which can be displayed in legible form throughout the display. For example, Fig. 5 shows tags 34 displayed as a result of a user's search for "**yofline**"; Fig. 6 shows a portion of the display of Fig. 5 at an expanded scale. Fig. 7 shows the display of two sets of tags 34 that are embedded in the document. The system recognizes a word following the three-character sequence asterisk-digit-asterisk as a tag. For example, near the middle of Fig. 7 it can be seen that "∗**1**∗" identifies **"reopen"** as an embedded tag.

The figures illustrate the control that the user has over tag display. In Fig. 4 no tags are displayed. In Fig. 5 only tags showing results of a single search are displayed. In Fig. 7 embedded tags corresponding to digit 1 (e.g., "**reopen**") and to digit 2 (e.g., "**WINDOW**") are displayed. In the particular document displayed in these figures, "1" tags have been used to mark subroutine entry points and "2" tags have been used to mark major headings.

### 1.1 Visual Compression

The major portion of the display is text in visually compressed form 22, which is, in effect a form of the original text compressed vertically by 16 times, with no horizontal compression. More particularly, while in the windows 24 the text is displayed with a character size of 16 pixels (vertically) by 8 pixels (horizontally), each line 36 of text corresponds to only one row of pixels in the visually compressed portion. Thus, the visually compressed portion of the display represents text at a 16-to-1 compression ratio.

Two characters of text correspond to a single unit of visual compression, which is displayed as a single row of 16 pixels; a unit of visual compression is the same width as that of the two characters being represented. If one or both of the two characters corresponding to a unit of visual compression is/are a visible character (e.g., an alphanumeric or punctuation character), then that unit of visual compression is displayed as alternating off and on pixels (i.e., eight white pixels and eight black pixels in total); otherwise that unit of visual compression is displayed as all white pixels.

The black pixels on odd lines are horizontally offset one pixel from the black pixels on even lines. This results in a checkerboard pattern that is perceived as gray. This has the advantage that when a tag is displayed in reverse video (white characters on a black background, which is reverse with respect to the text in the windows), the tag appears as a black rectangle against a gray background (in the visually compressed portion) or against a white background (in the windows).

Alternatively, visual compression could be computed on the basis of a one-to-one correspondence between characters and units of visual compression. However, when visual compression is computed as described in the previous paragraph, single character spaces do not appear in the visually compressed portion, resulting in more visual emphasis on the overall shape of the text, without the distraction of holes created by individual spaces. This characteristic has been found to be useful.

There is another advantage to choosing the unit of visual compression to be 16 pixels wide. If each unit of visual compression is represented by a single pixel, the resulting display is compressed both horizontally and vertically by the same factor of 16.

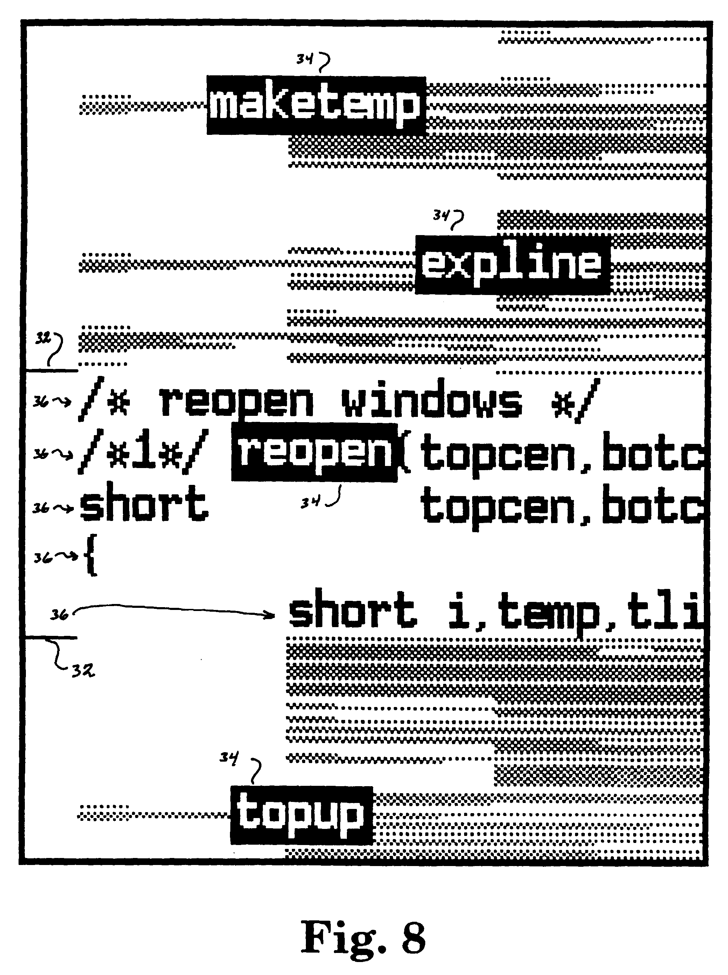

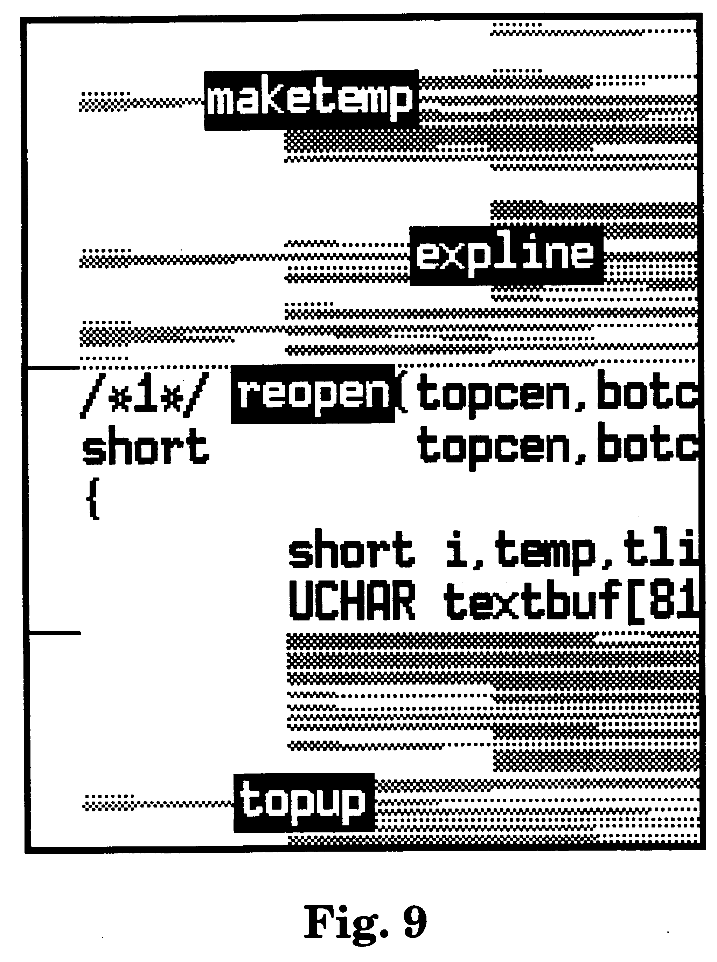

Fig. 8 shows a portion of the display of Fig. 7 at a scale that makes individual pixels visible. Fig. 9, Fig. 10, Fig. 11, and Fig. 12 each show exactly the same portion of the display as shown in Fig. 8, but in each case the window of legible text has been moved down one line from the preceding figure. By comparison of succeeding figures in this sequence one can see the correspondence between visible characters and the visually compressed portion.

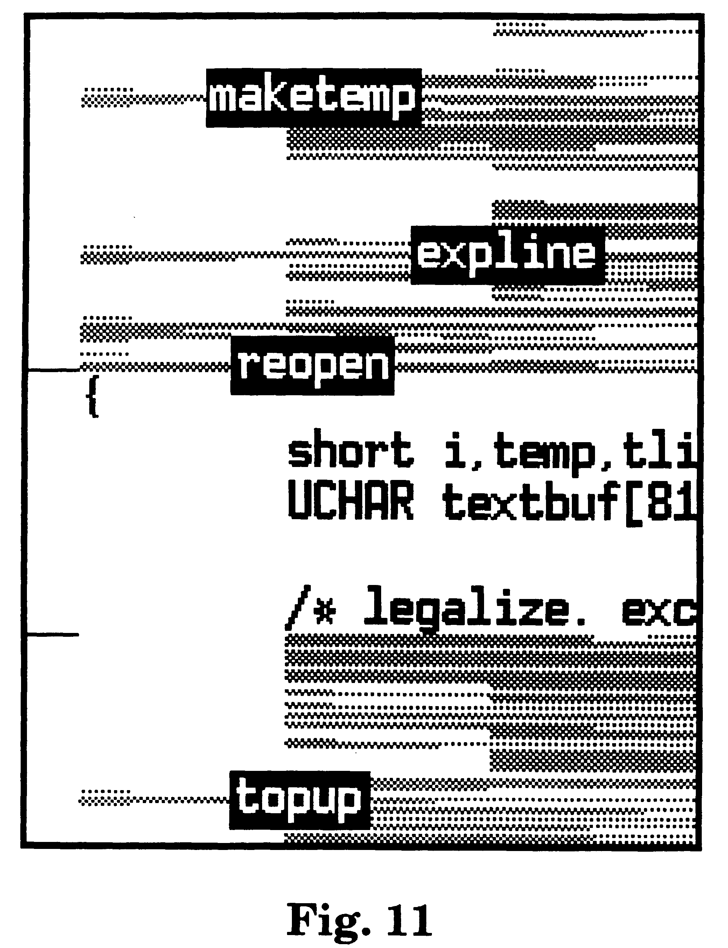

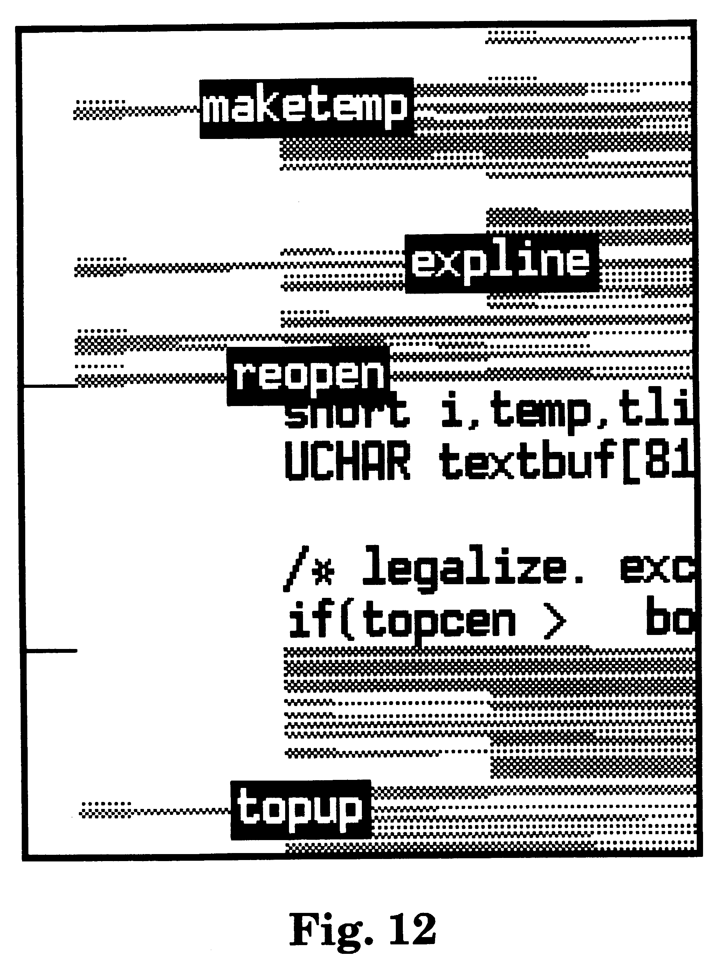

For example, by comparing Fig. 11 and Fig. 12, one can identify the unit of visual compression in Fig. 12 that corresponds to the brace ("{") that appears on the left end of the window in Fig. 11. There are a series of isolated visual compression units visible on the left side of these figures that each corresponds to a brace; these are each 16 pixels long (of which 8 are black), the width of two characters.

By comparing Fig. 8 and Fig. 9, one can see that the isolated space in "**UCHAR textbuf**" (see Fig. 9) is not manifest in the corresponding visually compressed portion (see Fig. 8). On the other hand, the three spaces between ">" and "**bo**" (in Fig. 12) does manifest itself in a single unit of white visual compression (under "**ze. exc**" in Fig. 11).

### 1.2 Tags

Both in visually compressed text and in the windows, each tag 34 appears at the horizontal location at which it occurs on its line of text. When a tag appears in the visually compressed text, it is approximately centered (vertically) on the visually compressed line to which it relates.

Tags 34 may be identified by codes located in the text. Although the visibility of these tags may be turned off and on, these are "permanent" in the sense that they are embedded in the document itself. Other tags may be temporary; for example, tags can be created during the course of viewing the document by directing the system to search for particular text strings.

SCROLL 20 provides for eight sets of tags 34. Fig. 7 shows the display of two sets of embedded tags: some are marked by "∗**1**∗" in the document and the other are marked by "∗**2**∗". Fig. 5 shows a third set of tags 34 enabled, while the display of each of the two sets of embedded tags 34 has been disabled; this third set is the result of a search for the string "**yofline**".

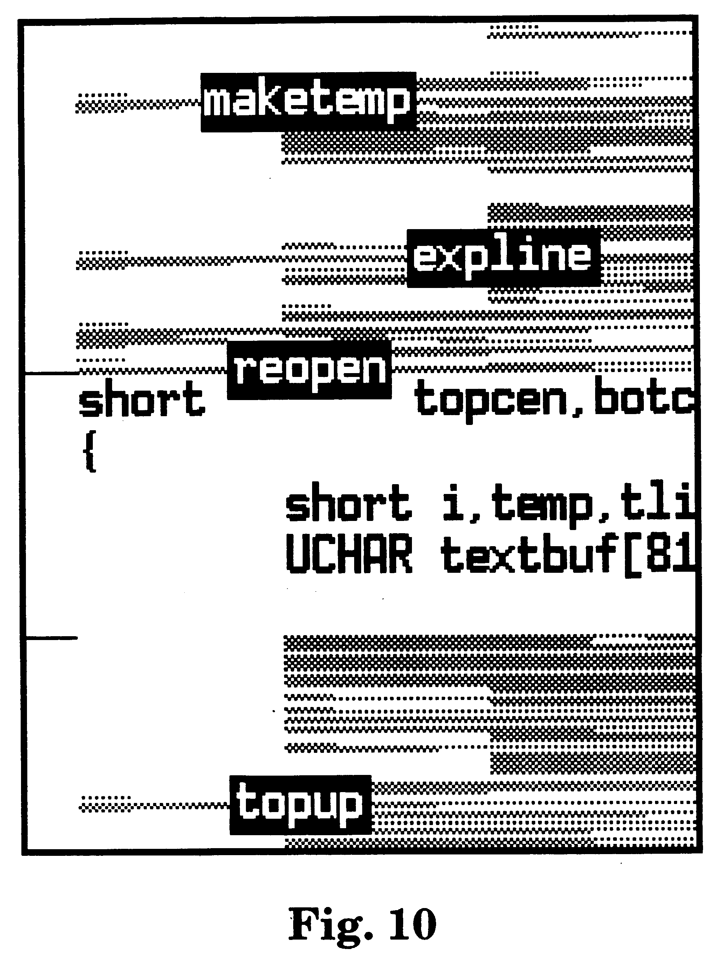

The figures Fig. 8 through Fig. 12 show how a tag 34 moves as it transitions between a window 24 and visually compressed text 22. From Fig. 8 to Fig. 9, the "reopen" tag 34 moves up one text line. From Fig. 9 to Fig. 10, the tag makes a jump of half the height of visible text and moves out of the window 24. At this point (Fig. 10), the tag 34 is associated with and centered on the first line of visually compressed portion 22 above the window 24, but extends into the window 24. In Fig. 11 and Fig. 12, the window 24 continues to move downward, while the tag 34 remains centered on its line of visual compression 22.

### 1.3 Window Control

The present invention is well suited to control by a pointing device 16; the illustrative embodiment of the invention uses a digitizing tablet and stylus. When the user 38 touches the stylus to the tablet, the closest window moves (vertically) to the position on the display that corresponds to the position touched on the tablet. If the position that the window 24 needs to move is relatively small (e.g., less than or equal to 100 lines), the window 24 scrolls (i.e., the line-by-line movement is displayed; if the distance from the window's 24 position to its target position is large (e.g., greater than 100 lines), it jumps to the target location without being displayed at any of the intermediate positions. Alternatively, window jumps could include display of a subset of the intermediate locations.

If the user 38 holds the stylus down on the tablet and drags, the system attempts to make the closest window 24 move to and track the stylus location. If the target location indicated by the stylus is too far from the window 24 (e.g., more than 100 lines), then the system waits for the user to lift the stylus, at which point the window 24 jumps to the target location.

If the present invention is employed with a tablet that overlays the display, the user 38 can point (with the stylus) directly to the portion of the document that the user 38 desires to see displayed in a window 24, and the system will move a window 24 to that location. Further, the user can place the stylus "on" the window and drag it through the document.

When one of the windows 24 becomes adjacent to the other window 24, the two windows 24 become latched together: the marks 32 between the two windows 24 showing the vertical extent of the windows 24 are eliminated, making the pair of windows 24 appear visually as a single window 28 that is twice the size of the individual windows 24; this double-size window 28 then can be dragged as a single window. If the stylus touches down in the upper quarter of the combined window 28 and drags upward, the window 28 splits and the upper window 24 follows the stylus; similarly, if the stylus touches down in the lower quarter of the window 28 and drags downward, the window 28 splits and the lower window 24 follows the stylus.

### 1.4 Other Operational Aspects

A user 38 starts SCROLL 20 in the same manner as other programs are started when using MSDOS. In starting SCROLL 20, the user also specifies a parameter, which is the name of the file containing the document to be displayed.

When using SCROLL 20 to browse through a document, the stylus is the primary control device. However, a keyboard 40 is useful in such operations as requesting a search of the document for occurrences of a specified text string. To perform such an operation, the user presses the S key and the system prompts the user to type the text string for which a search is desired. After the user enters the string, the system searches the document for occurrences of the string, creates tags for each location in the document where the string is found, and then enables display of those tags, thereby making the search results visible.

Other keys provide control of the visibility of the various sets of tags 34. Each of the eight sets of tags 34 provided by SCROLL 20 can be individually enabled/disabled for display. This is done with digit keys 1-8, each of which toggles the display state of a corresponding set of tags 34.

Although a pointing device is a convenient way to move the windows, there are occasions when keyboard control is useful. Although SCROLL 20 does not provide for keyboard control of window position, the addition of keyboard control of window position is straightforward.

Pressing the q key causes SCROLL to terminate and return control to MSDOS.

### 2 Implementation

### 2.1 Data Structures

During its operation, SCROLL 20 uses a temporary file 42 (used for the duration of execution of SCROLL 20) that contains the text of the input file arranged as an array of 80 character lines. The organization of this temporary file facilitates the many line-oriented operations that SCROLL performs.

Tag 34 information is stored in a combination of several data structures 44. There is an array of tag 34 entries, each of which stores the line and character position associated with a tag 34, an index into a list of ASCII character strings, and other information such as tag 34 type. There is an array that functions as an index to the tag entries; this index being sorted according to the line on which a tag 34 appears. There is a list of the character strings used to generate the displayed form of the tags.

The visually compressed text 22 is stored in an array of 6-byte entries, one entry for each line to be displayed. The visually compressed text 22 is stored as one bit per visual compression unit. This is interpreted by a software routine which displays a row of 16 pixels for each bit representing a visual compression unit: if the bit is set then one of two patterns of alternating black and white pixels is displayed (the particular pattern depending upon whether the line is even-numbered or odd-numbered); otherwise the 16 pixels are all white.

Each 6-byte entry in the visual compression array has 48 bits, which provides for representation of 40 visual compression units for the 80 characters of a line and 4 units of margin on each side of the display. At initialization, a compression calculation software routine sets the inner units of these margins to be "off' (white). When this array is interpreted by the display software routine, the outer 3 units are forced to solid black (not the gray that is used to display the visually compressed portion), resulting in a white border that is the width of a single unit of visual compression (two character widths).

### 2.2 Flow of Control

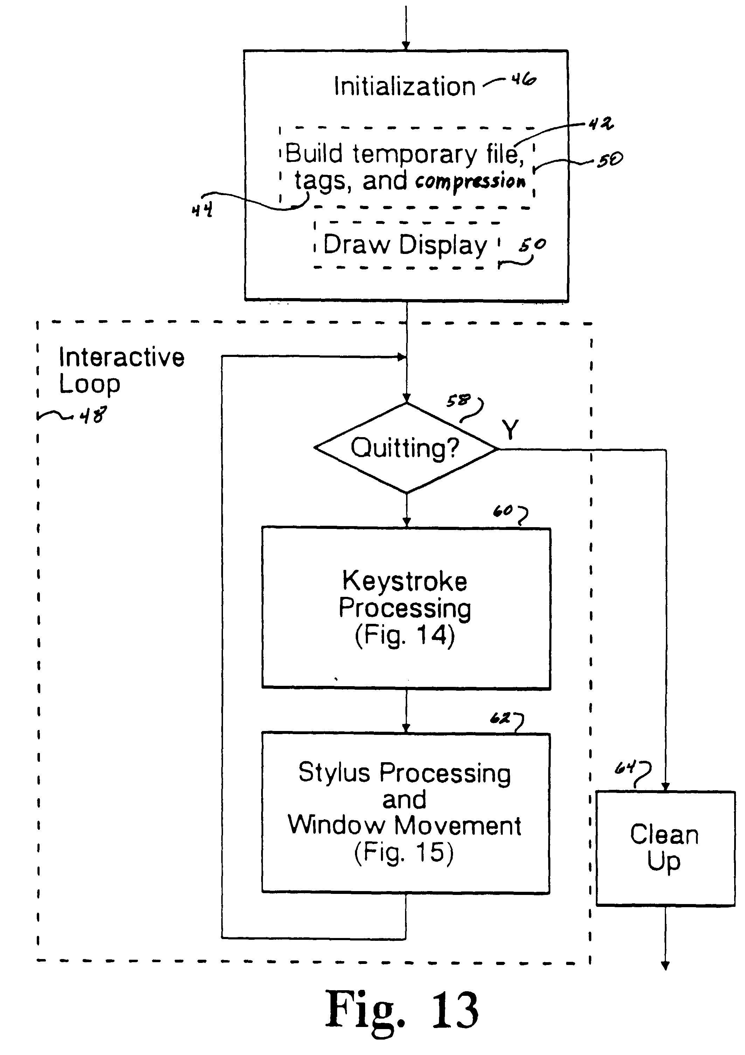

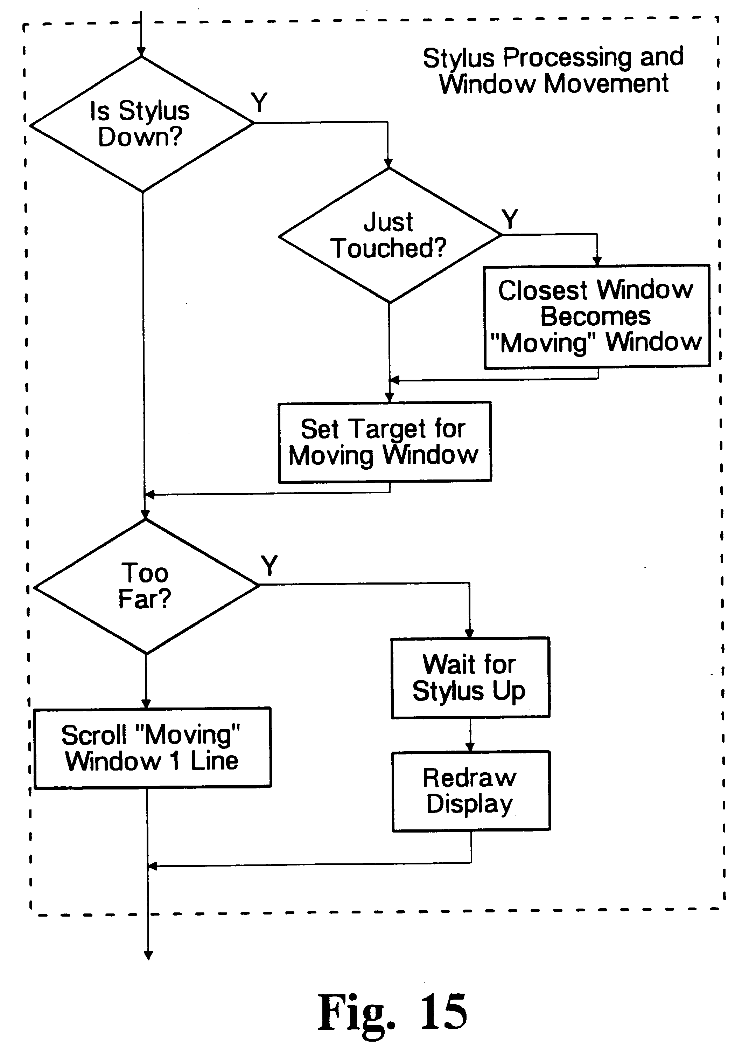

The overall flow of the SCROLL 20 program is illustrated in Fig. 13. The operation of window movement according to stylus position is further detailed in Fig. 15.

When SCROLL 20 is started 46, it performs certain initialization operations and then enters an interactive loop 48 that continues until the user "quits" by use of the q key. The initialization includes reading the input file and creating 50 the temporary file that is organized into 80 character lines. As each line is added to the temporary file, the line is also scanned for tags and the visually compressed form is created. The last major step of initialization is the drawing 52 of the initial display of visually compressed text 22,54 with the legible text windows 24,56 in their initial positions. In the illustrative embodiment, the windows always begin at the same two locations. The system could be arranged to set the initial window positions according to some information pertaining to the user's access to the document - e.g., the first match of a search, the locations of the windows the last time the document was displayed.

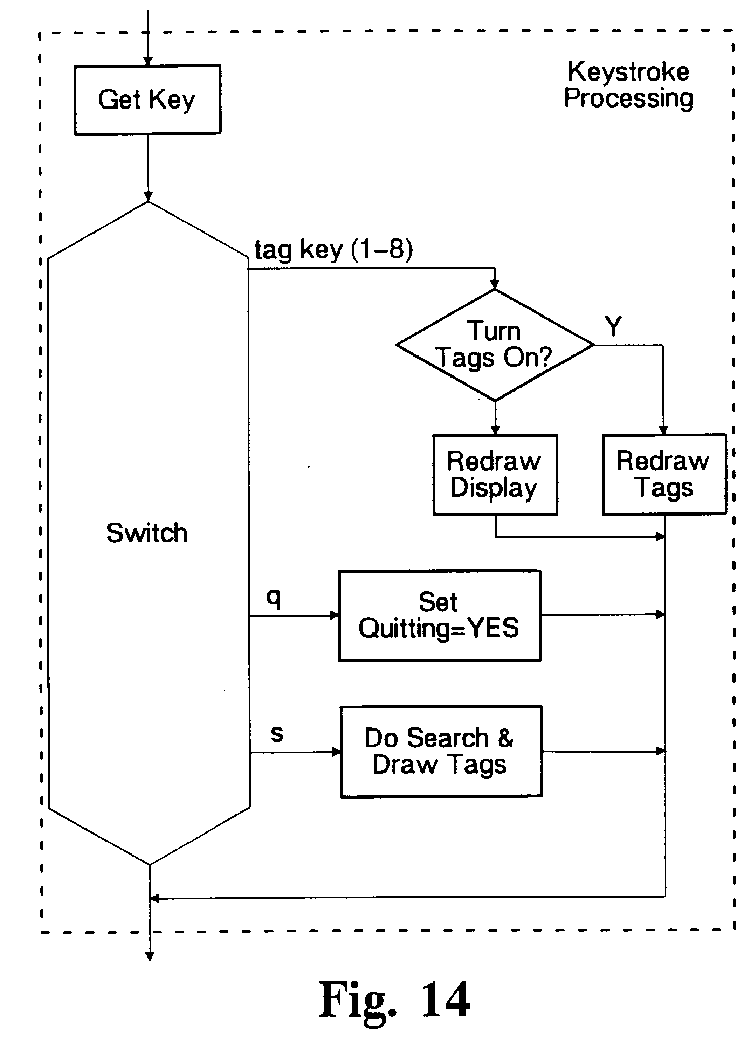

The interactive loop 48 is repeated until a variable "**quitting**" 58 is set. The interactive loop begins by testing 60 for a keystroke from the user (see Fig. 14). If a key has been pressed that corresponds to a set of tags that are currently displayed, then the display state for that set of tags is toggled to "off' and the display is redrawn. If, instead, a key has been pressed that corresponds to a set of tags not currently displayed, then the display state for that set of tags is toggled "on" and only the tags are redrawn. If the q key has been pressed then "**quitting**" is set, indicating that this will be the last time through the interactive loop.

If the user has requested a search (the s key), then the user is prompted to enter the string for which the text is to be searched, after which the temporary file is searched, the tag data structures updated appropriately, and the tags are redrawn. The system of the illustrative embodiment includes a second display screen, on which the prompt and response are displayed. Alternatively, this could be done on the same screen on which the document is displayed, either in a portion of the screen reserved for user interaction or directly over the document display; in the later case, at least the overwritten portion of the document display must be redrawn.

After keystroke processing 60, stylus processing and window movement 62 is performed (see Fig. 15). If the stylus is down, the next step in the interactive loop is to consider the stylus position. If the stylus has just touched down since the last time through the loop, then the window closest to the line to which the stylus is pointing becomes the moving window. The targeted center position for the currently moving window is set to the line of legible or visually compressed text to which the stylus is pointing. The last step in the interactive loop depends on whether either of the windows is too far from its target location. If one of the windows is farther than 100 lines from its target position, the system waits for the user to lift the stylus from the tablet, after which the display is redrawn 52 with the windows at their target locations. Otherwise, the currently moving window is scrolled 52 by one line toward its target position.

When a window 24 is scrolled, the display is updated as follows: the text window 24 is drawn 52, the visually compressed portion 22 near the window 24 is redrawn 52 (because tags could have jumped out of this visually compressed portion), and the tags 34 in a range around and including the window 24 are redrawn 52. Because redrawing of the nearby visually compressed portion 22 can overwrite a tag 34, the range of redrawn tags 34 extends beyond those that overlap the window 24; it includes tags 34 that overlap the redrawn visually compressed portion 22.

If the user 38 did not press the q key, the interactive loop 48 begins again.

When the interactive loop 48 is terminated, after some cleanup 64, the SCROLL 20 program terminates its execution.

### 3 Second Level of Visual Compression

The scroll system 10 uses a display of 1024 lines and, as described above, provides for display of approximately 13 pages of a document. A variation on the system described above can display much larger documents (or larger portions of yet larger documents) by using a second level of visual compression. The visual compression described above effects visual compression by a factor of 16 in a single dimension.

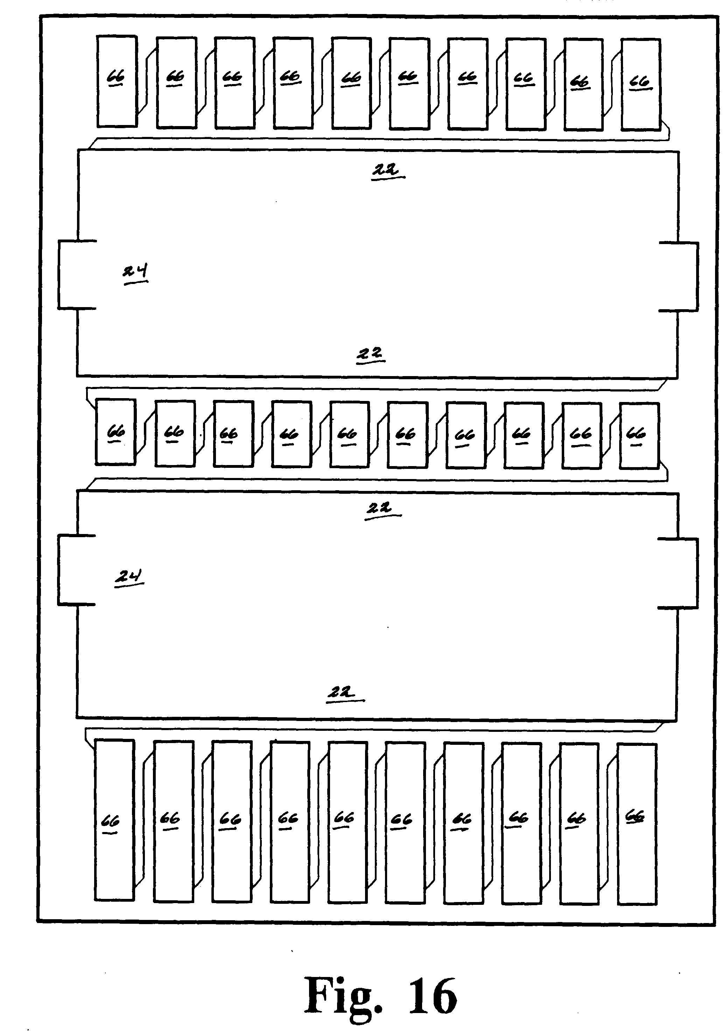

By compressing horizontally, as well as vertically, more text can be displayed on the same screen. For example, Fig. 16 illustrates a screen display that has text at each of two different levels of visual compression. The small chains of boxes 66 at the top, middle, the bottom of the figure represent portions 22 of text that is visually compressed horizontally and vertically. These boxes 66 could display the type of visual compression described above, but with only one pixel per visual compression element. The remaining portions of the display includes windows 24 of legible text movable within regions 22 of text that are compressed in only the vertical dimension, as described above. As illustrated in Fig. 16, the amount of text between the windows may be such that the second level of compression is used for some of the text between the windows. When the windows are much closer, the second level of compression would disappear from the middle of the document. Similarly, depending upon window position, the boxes 66 representing text 22 at the second level of visual compression may disappear at either end of the display. The number of lines in each of the three rows of boxes 66 is adjusted depending upon the positions within the document of the windows of legible text 24. When a window 24 comes close to the edge of its region of one-dimensional visual compression, the display is readjusted, generally lengthening the small boxes 66 in one of the three rows and shortening the small boxes 66 in another of the three rows. In addition, if the user 38 touches a place corresponding to one of the little boxes 66, the display is rearranged, so as to move a window 24 to that part of the document to which the user 38 has pointed.

The locations of tags 34, as described above, can provide a user 38 with valuable information (e.g., context that aids the user in identifying locations within the document, or information about how the matter identified by the tags 34 is distributed through the document). These tags 34 can be displayed in the same pages, as well as in the portions of the document in and near the windows.

If the type of visual compression described above is also used for the small "pages", then these pages provide about an order of magnitude more compression than in the portion of the display that is only compressed in the vertical dimension. (Within one of the page boxes, the increase in compression is a factor of 16; however because of the space between the boxes the effective compression is less.)

Even larger documents could be displayed by using a more aggressive compression scheme for the second level of compression. For example, a single line of visually compressed text can represent more than one line of actual text.

### 4 Additional Variations

The implementation described above illustrates the use of the inventive scrolling mechanisms outside the context of any particular application. However, these mechanisms are well suited for incorporation into systems for performing specific functions, such as the following examples. The present display arrangement can be used for a document editor; the present inventive display capabilities can be added to an editor, or editing capabilities can be added to the illustrative embodiment described above. It can be used by a window manager, where the window manager is responsible for providing the user ways to view (through windows) "screens" larger then the window through which they are being viewed. The present invention could be used with a data retrieval system when search results re too extensive to be legible on the screen at one time; the tags could be used to identity locations of words that were the subject of the search, showing the words as they actually appear at their respective locations in the search results (for example, in the case where the retrieval system uses a thesaurus to search for words in addition to those supplied by the user, the word actually found in the document would be displayed).

The illustrative embodiment described above displayed tags that were visible throughout. Similarly, other mechanisms can be used for indicating information in the document. For example, color could be used; like the tags, this color could appear both in the legible portion of the document and in the visually compressed portion of the document. Black (rather than gray) visual compression could be used to highlight portions of the document. The color or other highlighting could be of various significance, e.g., text marked by the user, type of information (e.g., data structures, comments, subroutines), regions of redaction, authorship, vintage.

Further types of tags would be useful in certain applications. For example, it may be useful to provide for markers that a user can insert to remember places of interest in a document. In documents that have meaningful page boundaries, tags could be included that mark these pages, permitting the user to go directly to a particular page by placing the stylus at the corresponding page tag. These page tags could appear along the edge of the document display. In shared documents, sets of tags may be personal to individual users.

Provision could also be made for a user to add handwritten annotations to the document. In this case either the system would save all or annotated portions of the document in bitmap form (rather than ASCII), or would save the annotations as vectors.

The focus of the detailed discussion above has been on a system using two expansion windows. However, the present invention can be employed with only a single such window and can be employed with more than two windows.

As indicated above, the invention can be implemented on computer systems other than that described in the illustrative embodiment above. In particular, one can implement this using the 640 pixel by 480 pixel mode of a VGA-type display. In that case, it is appropriate to use smaller characters (e.g., 8x6 pixel character cells) so that a display can be created that is comparable in scope to that achieved on the 1024x1024 display of the illustrative embodiment.

Although the illustrative embodiment utilizes a stylus and digitizing tablet, the invention can be implemented with other pointing devices. For example, a mouse can be used. With reduced utility, even a keyboard can be used.

The term "document" has been used to describe the body of data through which the present invention provides navigation. In the present context, "document" includes any body of data that includes text, such as text files, word processing documents, database records, compound documents. The data of a "document" may be stored in a file on a mass storage device, or may be more transitory in nature (e.g., database search results assembled at the time the user requests their presentation).

In the illustrative embodiment, a line of the visually compressed representation corresponds to a line of characters in the document; further, a line of the visually compressed representation is a single row of pixels. Alternatively, two or more lines of characters can be compressed into a single line of the visually compressed representation. Further, a line of the visually compressed representation can be displayed as two or more rows of pixels. In addition, one skilled in the art will appreciate that other methods for computing the visual compression could be used to emphasize or de-emphasize particular aspects of documents.

## Claims

1. Apparatus (10) for displaying in an available area of a display screen (14) a larger portion of a document than can be legibly displayed in that area at one time, the apparatus including
a display screen (14) ;
compressed disclay means (54) for displaying on the display screen (14) at least a portion (22) of the document in a visually compressed form in which text is not legible, but that does portray overall shapes in the document;
legible display means (56) for displaying on the display screen (14) a portion (24) of the document in a legible form;
a user input device (16,42);
characterized by
a drawing control means (52) for directing operation of the compressed display means (54) and the legible display means (56) to display a continuous portion of the document as a combination of the visually compressed portion (22) and the legible portion (24) positioned such that the visually compressed and legible portions of the document together comprise a single display with the legible portion (24) being located and displayed within the visually compressed portion (22) at the location within the visually compressed portion (22) that contains the text that is displayed in the legible portion (24) of the document; and
a movement control means (52, 62) responsive to the user input device (16,42) for directing operation of the drawing control means (52), the legible display means (56), and the compressed display means (54) to change the portion of the document that is displayed by the legible display means (56) such that a window of legibility is movable through the visual compressed portion (22) by the user.

2. The apparatus of claim 1;
characterized by
a means (45) for associating tags (34) with specific locations in the document; and
a tag display means (44) responsive to the tags (34) for displaying the tags (34) on the display screen (14) in legible form at locations on the display screen (14) corresponding to said specific location in the document associated with said tags (34) such that each tag (34) is legibly displayable at its corresponding location on the display screen (14) in either the compressed or the legible portion of the document display.

3. The apparatus of claim 2,
characterized in that
the tag display means (44) includes means for displaying the tags (34) on the display screen at the same horizontal locations on the display screen whether the tag (34) is displayed in a visually compressed portion (22) of the document display or a legible portion (24) of the document display.

4. The apparatus of claim 1;
characterized by
a means (52, 45) for identifying portions of the document to be highlighted; and
said compressed display means (54) and legible display means (56) each including respective highlighting means responsive to the means for identifying portions of said document to be highlighted for displaying the identified portion of said document such that, in both the visually compressed and legible portions of the document display, highlighted portions of the document are visually distinguished from other portions of the document.

5. The apparatus of claim 4,
characterized in that
the respective highlighting means displays hightlighted portions of the document in different colors than non-highlighted portions.

6. The apparatus of claim 1, wherein:
the user input device (16,42) is a stylus and digitizing tablet; and
said movement control means (52, 62) respectively maintains a correspondence between locations on the tablet, locations on the display screen (14) and locations in the document as currently displayed, and is responsive to an action of the stylus touching the tablet to display the portion of the document currently corresponding to the location on the display screen (14) corresponding to the touched location on the tablet.

7. The apparatus of claim 1, wherein
the user input device (16,42) is a mouse including a mouse button; and further including
mouse pointer control means (52, 62) for receiving data from the mouse, displaying on the display screen (14) a mouse pointer whose location tracks cumulative mouse movements and identifying the portion of the document displayed at the current location of the mouse pointer on the display screen (14); and
wherein
the movement control means being responsive to clicking said button on the mouse to control the legible display means (56) to legibly display the identified portion of the document.

8. The apparatus of claim 1, wherein the user input device (16,42) is a keyboard.

9. The apparatus of claim 1,
characterized in that
the compressed display means (54) includes means for displaying on the display screen (14) a portion (22) of the document in a form that is visually compressed in the vertical direction to the extent that individual characters are not legible, where the width of the visually compressed display (22) is substantially the same width as the display (24) of the legible display means (56).

10. The apparatus of claim 1, wherein
the compressed display means (54) includes means for displaying on the display screen (14) a portion of the document in a form that is visually compressed in both the horizontal direction and in the vertical direction to the extent that individual characters of the document are not legible.

11. The apparatus of claim 9 or 10,
characterized in that
the movement control means (52, 62) is operable, in response to an event from the user input device (16,42) that indicates a location in the display presented by the compresssion means, indicating a corresponding location in the document, to cause the legible display means (56) to display a portion of the document that includes the indicated location in the document.

12. The apparatus of claim 9 or 10,
characterized by
a means (45) for associating tags (34) with specific locations in the document; and
a tag display means (44) responsive to the tags (34) for displaying the tags (34) on the display screen (14) in legible form at locations of the display screen (14) at which the specific locations in the document are displayed, such that each tag (34) is legibly displayable at its corresponding location on the display screen (14) in either the legible portions (24) of the document display or in the portions of the display screen (14) being displayed by the compressed display means (54).

13. A method for controlling the display in an available area on a display screen (14) of a document larger than can be legibly displayed in that area at one time, the display being controlled in response to manipulation of a user input device (16,42), comprising the steps of:
presenting on the display screen (14) at least a portion (22) of the document in a visually compressed form in which text is not legible, but that does portray overall shapes in the document;
presenting on the display screen (14) a legible display of a portion (24) of the document;
accepting input data from the user input device (16,42); changing the portions of the document displayed in visually compressed and in legible form in response to the input data;
characterized by the steps of
displaying a continuous portion of the document as a combination of the visually compressed portion (22) and the legible portion (24) such that the visually compressed (22) and legible (24) portions of the document together comprise a single display with the legible portion (24) being located and displayed within the visually compressed portion (22) at the location within the visually compressed portion (22) that contains the text that is displayed in the legible portion (24) of the document.

14. The method of claim 13;
characterized in that
the positioning step includes the step of changing the document display responsive to the input data such that the user input device (16,42) is usable to drag the region of legibility (24).

15. The method of claim 13,
characterized in that
the positioning step further includes the steps of:
changing the document display responsive to the input data such that the user input device (16,42) is usable to point to a portion (22) of the document displayed in visually compressed form; and
displaying the pointed to portion of the document in legible form.

16. The method of claim 13;
characterized by
associating tag strings (34) with specific locations in the document; and
displaying legible forms of the tag strings (34) at locations on the display screen (14) that correspond to the relative locations of the tag strings (34) in the document, such that tags (34) are displayed in both areas of visually compressed display (22) and in areas of legible display (24).

## Patentansprüche

1. Vorrichtung (10), die in einem verfügbaren Bereich eines Anzeigebildschirms (14) einen größeren Abschnitt eines Dokumentes anzuzeigen vermag, als in diesem Bereich jeweils lesbar angezeigt werden kann, mit:
- einem Anzeigebildschirm (14),
- einer Einrichtung (54) zum komprimierten Anzeigen, die auf dem Anzeigebildschirm (14) wenigstens einen Abschnitt (22) des Dokumentes in einer visuell komprimierten Form anzuzeigen vermag, in der Text nicht lesbar ist, die aber die allgemeinen Formen im Dokument darstellt,
- einer Einrichtung (56) zum lesbaren Anzeigen, die auf dem Anzeigebildschirm (14) einen Abschnitt (24) des Dokumentes in lesbarer Form anzuzeigen vermag,
- einer Benutzereingabevorrichtung (16, 42),
gekennzeichnet durch
- eine Ziehsteuereinrichtung (52) zum Steuern der Operation der Einrichtung (54) zum komprimierten Anzeigen und der Einrichtung (56) zum lesbaren Anzeigen in der Weise, daß ein durchgehender Abschnitt des Dokumentes als Kombination des visuell komprimierten Abschnitts (22) und des lesbaren Abschnitts (24) so positioniert angezeigt wird, daß der visuell komprimierte und der lesbare Abschnitt des Dokumentes zusammen eine einzige Anzeige bilden, in welcher der lesbare Abschnitt (24) innerhalb des visuell komprimierten Abschnitts (22) an der Stelle innerhalb des visuell komprimierten Abschnitts angeordnet und angezeigt wird, die den im lesbaren Abschnitt (24) des Dokumentes angezeigten Text enthält, und
- eine Bewegungssteuereinrichtung (52, 62), die in Abhängigkeit von der Benutzereingabevorrichtung (16, 42) die Operation der Ziehsteuereinrichtung (52), der Einrichtung (56) zum lesbaren Anzeigen und der Einrichtung (54) zum komprimierten so steuert, daß der Abschnitt des Dokumentes, der von der Einrichtung (56) zum lesbaren Anzeigen angezeigt wird, in der Weise geändert wird, daß ein Lesbarkeitsfenster durch den visuell komprimierten Abschnitt (22) durch den Benutzer bewegbar ist.

2. Vorrichtung nach Anspruch 1,
gekennzeichnet durch
- eine Einrichtung (45) zum Zuordnen von Kennzeichen (34) zu speziellen Stellen im Dokument, und
- eine Kennzeichenanzeigeeinrichtung (44), die in Abhängigkeit von den Kennzeichen (34) diese auf dem Anzeigebildschirm (14) in lesbarer Form an Stellen auf dem Anzeigebildschirm (14) anzeigt, die den genannten speziellen Stellen im Dokument entsprechen, denen die Kennzeichen (34) zugeordnet sind, derart, daß jedes Kennzeichen (34) an seiner entsprechenden Stelle auf dem Anzeigebildschirm (14) entweder im komprimierten oder im lesbaren Abschnitt der Dokumentenanzeige lesbar anzeigbar ist.

3. Vorrichtung nach Anspruch 2,
dadurch gekennzeichnet, daß
die Kennzeichenanzeigeeinrichtung (44) eine Einrichtung zum Anzeigen der Kennnzeichen (34) auf dem Anzeigebildschirm in waagerechter Richtung an denselben Stellen auf dem Anzeigebildschirm anzeigt, unabhängig davon, ob das Kennzeichen (34) in einem visuell komprimierten Abschnitt (22) der Dokumentenanzeige oder in einem lesbaren Abschnitt (24) der Dokumentenanzeige angezeigt ist.

4. Vorrichtung nach Anspruch 1,
gekennzeichnet durch
- eine Einrichtung (52, 45) zum Bezeichnen von hervorzuhebenden Abschnitten des Dokumentes, und dadurch, daß
- die Einrichtung (54) zum komprimierten Anzeigen und die Einrichtung (56) zum lesbaren Anzeigen je eine zugehörige Hervorhebungseinrichtung aufweisen, die auf die Einrichtung zum Bezeichnen von hervorzuhebenden Abschnitten des Dokumentes in der Weise anspricht, daß sowohl im visuell komprimierten wie im lesbaren Abschnitt der Dokumentenanzeige hervorgehobene Abschnitte des Dokumentes sich visuell von anderen Abschnitten des Dokumentes abheben.

5. Vorrichtung nach Anspruch 4,
dadurch gekennzeichnet, daß
die zugehörige Hervorhebungseinrichtung hervorgehobene Abschnitte des Dokumentes in von nicht hervorgehobenen Abschnitten verschiedenen Farben anzeigt.

6. Vorrichtung nach Anspruch 1, bei der
- die Benutzereingabevorrichtung (16, 42) ein Griffel und ein Digitalisiertablett ist, und
- die Bewegungssteuereinrichtung (52, 62) eine Entsprechung zwischen Stellen auf dem Tablett, Stellen auf dem Anzeigebildschirm (14) und Stellen im aktuell angezeigten Dokument aufrechterhält und auf eine Aktion des das Tablett berührenden Griffels in der Weise anspricht, daß sie den Abschnitt des Dokumentes anzeigt, der aktuell der Stelle auf dem Anzeigebildschirm (14) entspricht, die der berührten Stelle auf dem Tablett entspricht.

7. Vorrichtung nach Anspruch 1, bei der
- die Benutzereingabevorrichtung (16, 42) eine Maus mit einer Maustaste ist, und sie ferner
- eine Mauszeigersteuereinrichtung (52, 62) aufweist zum Empfangen von Daten von der Maus, Anzeigen am Anzeigebildschirm (14) eines Mauszeigers, dessen Ort kumulativen Mausbewegungen folgt, und zum Kennzeichnen des Abschnitts vom Dokument, der an dem aktuellen Ort des Mauszeigers auf dem Anzeigebildschirm (14) angezeigt wird, und bei der
- die Bewegungssteuereinrichtung auf das Klicken der Maustaste in der Weise anspricht, daß die Einrichtung (56) zum lesbaren Anzeigen den gekennzeichneten Abschnitt des Dokumentes lesbar anzeigt.

8. Vorrichtung nach Anspruch 1, bei der
die Benutzereingabevorrichtung (16, 42) eine Tastatur ist.

9. Vorrichtung nach Anspruch 1,
dadurch gekennzeichnet, daß
die Einrichtung (54) zum komprimierten Anzeigen eine Einrichtung aufweist, die auf dem Anzeigebildschirm (14) einen Abschnitt (22) des Dokumentes in einer Form anzuzeigen vermag, die in der senkrechten Richtung in dem Maße visuell komprimiert ist, daß einzelne Zeichen nicht lesbar sind, wobei die Breite der visuell komprimierten Anzeige (22) im wesentlichen von derselben Breite ist wie die Anzeige (24) der Einrichtung (56) zum lesbaren Anzeigen.

10. Vorrichtung nach Anspruch 1, bei der
die Einrichtung (54) zum komprimierten Anzeigen eine Einrichtung aufweist, die auf dem Anzeigebildschirm (14) einen Abschnitts des Dokumentes in einer Form anzuzeigen vermag, die sowohl in der waagerechten wie in der senkrechten Richtung in dem Maße visuell komprimiert ist, daß einzelne Zeichen des Dokumentes nicht lesbar sind.

11. Vorrichtung nach Anspruch 9 oder 10,
dadurch gekennzeichnet, daß
in Abhängigkeit von einem von der Benutzereingabevorrichtung (16, 42) ausgelösten Ereignis, das in der von der Komprimierungseinrichtung dargestellten Anzeige eine Stelle angibt,
die eine entsprechende Stelle im Dokument anzeigt, die Bewegungssteuereinrichtung (52, 62) die Einrichtung (56) zum lesbaren Anzeigen veranlaßt, einen Abschnitt des Dokumentes anzuzeigen, der die angegebene Stelle im Dokument enthält.

12. Vorrichtung nach Anspruch 9 oder 10,
gekennzeichnet durch
- eine Einrichtung (45) zum Zuordnen von Kennzeichen (34) zu speziellen Stellen im Dokument, und
- eine Kennzeichenanzeigeeinrichtung (44), die in Abhängigkeit von den Kennzeichen (34) dieselben auf dem Anzeigebildschirm (14) in lesbarer Form an Stellen des Anzeigebildschirms (14) anzeigt, an denen die speziellen Stellen im Dokument angezeigt werden, derart, daß jedes Kennzeichen (34) an seiner entsprechenden Stelle auf dem Anzeigebildschirm (14) entweder in den lesbaren Abschnitten (24) der Dokumentenanzeige oder in den Abschnitten des Anzeigebildschirms (14), die von der Einrichtung (54) zum komprimierten Anzeigen angezeigt sind, lesbar anzeigbar ist.

13. Verfahren zum Steuern der Anzeige in einem verfügbaren Bereich eines Anzeigebildschirms (14) eines Dokumentes, das größer ist, als in diesem Bereich jeweils lesbar angezeigt werden kann, wobei die Anzeige in Abhängigkeit von der Betätigung einer Benutzereingabevorrichtung (16, 42) gesteuert wird,
mit den Schritten:
- Darstellen auf dem Anzeigebildschirm (14) wenigstens eines Abschnitts (22) des Dokumentes in einer visuell komprimierten Form, in der Text nicht lesbar ist, die aber die allgemeinen Formen im Dokument darstellt,
- Darstellen auf dem Anzeigebildschirm (14) einer lesbaren Anzeige eines Abschnitts (24) des Dokumentes,
- Verarbeiten von Eingabedaten aus der Benutzereingabevorrichtung (16, 42),
- Ändern der Abschnitte des angezeigten Dokumentes entsprechend den Eingabedaten in visuell komprimierter und in lesbarer Form,
gekennzeichnet durch den Schritt:
- Anzeigen eines durchgehenden Abschnitts des Dokumentes als Kombination des visuell komprimierten Abschnitts (22) und des lesbaren Abschnitts (24) in der Weise, daß der visuell komprimierte Abschnitt (22) und der lesbare Abschnitt (24) des Dokumentes zusammen eine einzige Anzeige bilden, wobei der lesbare Abschnitt (24) innerhalb des visuell komprimierten Abschnitts (22) an der Stelle innerhalb des visuell komprimierten Abschnitts (22) angeordnet und angezeigt wird, die den im lesbaren Abschnitt (24) des Dokumentes angezeigten Text enthält.

14. Verfahren nach Anspruch 13,
dadurch gekennzeichnet, daß
der Positionierschritt den Schritt der Änderung der Dokumentenanzeige in Abhängigkeit von den Eingabedaten enthält, derart, daß die Benutzereingabevorrichtung (16, 42) zum Ziehen des Lesbarkeitsbereiches (24) benutzbar ist.

15. Verfahren nach Anspruch 13,
dadurch gekennzeichnet, daß
der Positionierschritt ferner die Schritte umfaßt:
- Ändern der Dokumentenanzeige in Abhängigkeit von den Eingabedaten, derart, daß die Benutzereingabevorrichtung (16, 42) zum Zeigen auf einen Abschnitt (22) des Dokumentes benutzbar ist, das in visuell komprimierter Form angezeigt ist, und
- Anzeigen des Abschnitts des Dokumentes, auf den gezeigt wird, in lesbarer Form.

16. Verfahren nach Anspruch 13,
gekennzeichnet durch
- Zuordnen von Kennzeichenketten (34) zu speziellen Stellen im Dokument, und
- Anzeigen lesbarer Formen der Kennzeichenketten (34) an Stellen auf dem Anzeigebildschirm (14), die den relativen Positionen der Kennzeichenkette (32) im Dokument entsprechen, derart, daß Kennzeichen (34) sowohl in Bereichen der visuell komprimierten Anzeige (22) als auch in Bereichen der lesbaren Anzeige (24) angezeigt werden.

## Revendications

1. Dispositif d'affichage dans une zone disponible d'un écran d'affichage (14) d'une plus grande partie d'un document que celle qui peut être affichée lisiblement dans cette zone en une seule fois, le dispositif comprenant
un écran d'affichage (14);
des moyens d'affichage compressé (54) pour afficher sur l'écran d'affichage (14) au moins une partie (22) du document sous une forme visuellement compressée dans laquelle un texte n'est pas lisible, mais qui représente les formes générales du document;
des moyens d'affichage lisible (56) pour afficher sur l'écran d'affichage (14) une partie (24) du document sous une forme lisible;
un dispositif d'entrée d'utilisateur (16, 42)
caractérisé par
des moyens de commande de représentation (52) pour diriger le fonctionnement des moyens d'affichage compressé (54) et des moyens d'affichage lisible (56) pour afficher une partie continue du document sous la forme d'une combinaison de la partie visuellement compressée (22) et de la partie lisible (24) positionnées de façon que les parties visuellement compressée et lisible du document forment ensemble un affichage unique, la partie lisible (24) étant située et affichée à l'intérieur de la partie visuellement compressée (22) à l'emplacement à l'intérieur de la partie visuellement compressée (22) qui contient le texte qui est affiché dans la partie lisible (24) du document; et
des moyens de commande de déplacement (52, 62) sensibles au dispositif d'entrée d'utilisateur (16, 42) pour diriger le fonctionnement des moyens de commande de représentation (52) des moyens d'affichage lisible (56) et des moyens d'affichage compressé (54) pour changer la partie du document qui est affichée par les moyens d'affichage lisible (56) de façon que l'utilisateur puisse déplacer une fenêtre de lisibilité dans la partie visuellement compressée (22).

2. Dispositif selon la revendication 1;
caractérisé par
des moyens (45) pour associer des étiquettes (34) à des emplacements spécifiques dans le document; et des moyens d'affichage d'étiquette (44) sensibles aux étiquettes (34) pour afficher les étiquettes (34) sur l'écran d'affichage (14) sous la forme lisible aux emplacements de l'écran d'affichage (14) correspondant auxdits emplacements spécifiques dans le document associés auxdites étiquettes (34) de façon que chaque étiquette (34) puisse être affichée lisiblement à son emplacement correspondant sur l'écran d'affichage (14) soit dans la partie compressée soit dans la partie lisible de l'affichage du document.

3. Dispositif selon la revendication 2,
caractérisé en ce que
les moyens d'affichage d'étiquette (44) comprennent des moyens pour afficher les étiquettes (34) sur l'écran d'affichage aux mêmes emplacements horizontaux sur l'écran d'affichage, que l'étiquette (34) soit affichée dans une partie visuellement compressée (22) de l'affichage du document ou dans une partie lisible (24) de l'affichage du document.

4. Dispositif selon la revendication 1;
caractérisé par
des moyens (52, 45) pour identifier des parties du document à mettre en relief; et
dans lequel lesdits moyens d'affichage compressé (54) et moyens d'affichage lisible (56) comprennent chacun des moyens de mise en relief respectifs sensibles aux moyens pour identifier des parties dudit document à mettre en relief pour afficher la partie identifiée dudit document de façon que, dans les deux parties visuellement compressée et lisible de l'affichage du document, des parties mises en relief du document soient visuellement distinguées d'autres parties du document.

5. Dispositif selon la revendication 4,
caractérisé en ce que
les moyens de mise en relief respectifs affichent des parties mises en relief du document dans des couleurs différentes de celles des parties non mises en relief.

6. Dispositif selon la revendication 1, dans lequel :
le dispositif d'entrée d'utilisateur (16, 42) est formé d'un stylet et d'une tablette de numérisation; et
lesdits moyens de commande de déplacement (52, 62) conservent respectivement une correspondance entre des emplacements sur la tablette, des emplacements sur l'écran d'affichage (14) et des emplacements dans le document tel qu'il est affiché actuellement, et sont sensibles à une action de contact du stylet sur la tablette pour afficher la partie du document correspondant actuellement à l'emplacement sur l'écran d'affichage (14) correspondant à l'emplacement touché sur la tablette.

7. Dispositif selon la revendication 1, dans lequel
le dispositif d'entrée d'utilisateur (16, 42) est une souris comprenant un bouton de souris; et comprenant de plus des moyens de commande de pointeur de souris (52, 62) pour recevoir des données de la souris, afficher sur l'écran d'affichage (14) un pointeur de souris dont l'emplacement suit les déplacements cumulés de la souris et pour identifier la partie du document affiché à l'emplacement actuel du pointeur de souris sur l'écran d'affichage (14); et dans lequel les moyens de commande de déplacement réagissent à un cliquage dudit bouton sur la souris pour commander aux moyens d'affichage lisible (56) d'afficher lisiblement la partie identifiée du document.

8. Dispositif selon la revendication 1, dans lequel
le dispositif d'entrée d'utilisateur (16, 42) est un clavier.

9. Dispositif selon la revendication 1,
caractérisé en ce que
les moyens d'affichage compressé (54) comprennent des moyens pour afficher sur l'écran d'affichage (14) une partie (22) du document sous une forme visuellement compressée dans la direction verticale au point que des caractères individuels ne soient pas lisibles, la largeur de l'affichage visuellement compressé (22) étant sensiblement la même que celle de l'affichage (24) des moyens d'affichage lisible (56).

10. Dispositif selon la revendication 1, dans lequel
les moyens d'affichage compressé (54) comprennent des moyens pour afficher sur l'écran d'affichage (14) une partie du document sous une forme visuellement compressée dans les deux directions horizontale et verticale au point que des caractères individuels du document ne soient pas lisibles.

11. Dispositif selon la revendication 9 ou 10,
caractérisé en ce que
les moyens de commande de déplacement (52, 62) peuvent servir, en réponse à un événement provenant du dispositif d'entrée d'utilisateur (16, 42) qui indique un emplacement dans l'affichage présenté par les moyens de compression indiquant un emplacement correspondant dans le document, à provoquer l'affichage par les moyens d'affichage lisible (56) d'une partie du document qui comprend l'emplacement indiqué dans le document.

12. Dispositif selon la revendication 9 ou 10,
caractérisé par
des moyens (45) pour associer des étiquettes (34) à des emplacements spécifiques dans le document; et
des moyens d'affichage d'étiquette (44) sensibles aux étiquettes (34) pour afficher les étiquettes (34) sur l'écran d'affichage (14) sous forme lisible aux emplacements de l'écran d'affichage (14) où les emplacements spécifiques du document sont affichés, de façon que chaque étiquette (34) puisse être affichée lisiblement à son emplacement correspondant sur l'écran d'affichage (14) soit dans les parties lisibles (24) de l'affichage du document soit dans les parties de l'écran d'affichage (14) affichées par les moyens d'affichage compressé (54).

13. Procédé pour commander l'affichage dans une zone disponible d'un écran d'affichage (14) d'un document plus grand que celui qui peut être affiché lisiblement dans cette zone en une seule fois, l'affichage étant commandé en réponse à la manipulation d'un dispositif d'entrée d'utilisateur (16, 42), comprenant les étapes consistant à :
présenter sur l'écran d'affichage (14) au moins une partie (22) du document sous une forme visuellement compressée dans laquelle un texte n'est pas lisible, mais qui représente les formes générales dans le document;
présenter sur l'écran d'affichage (14) un affichage lisible d'une partie (24) du document;
accepter des données d'entrée provenant du dispositif d'entrée d'utilisateur (16, 42);
changer les parties du document affichées sous forme visuellement compressée et sous forme lisible en réponse aux données d'entrée;
caractérisé par les étapes consistant à
afficher une partie continue du document sous la forme d'une combinaison de la partie visuellement compressée (22) et de la partie lisible (24) de façon que les parties visuellement compressée (22) et lisible (24) du document forment ensemble un affichage unique, la partie lisible (24) étant localisée et affichée à l'intérieur de la partie visuellement compressée (22) à l'emplacement à l'intérieur de la partie visuellement compressée (22) qui contient le texte qui est affiché dans la partie lisible (24) du document.

14. Procédé selon la revendication 13;
caractérisé en ce que
l'étape de positionnement comprend une étape consistant à changer l'affichage du document en réponse aux données d'entrée de façon que le dispositif d'entrée d'utilisateur (16, 42) puisse être utilisé pour traîner la région de lisibilité (24).

15. Procédé selon la revendication 13,
caractérisé en ce que
l'étape de positionnement comprend de plus les étapes consistant à :
changer l'affichage du document en réponse aux données d'entrée de façon que le dispositif d'entrée d'utilisateur (16, 42) puisse être utilisé pour pointer vers une partie (22) du document affiché sous la forme visuellement compressée; et afficher la partie pointée du document sous forme lisible.

16. Procédé selon la revendication 13;
caractérisé par
l'association de chaînes de caractères d'étiquette (34) à des emplacements spécifiques du document; et
l'affichage de formes lisibles des chaînes de caractères d'étiquette (34) aux emplacements de l'écran d'affichage (14) qui correspondent aux emplacements relatifs des chaînes de caractères d'étiquette (34) dans le document, de façon que les étiquettes (34) soient affichées à la fois dans les zones d'affichage visuellement compressé (22 ) et dans les zones d'affichage lisible (24).
